# EUROPÄISCHE PATENTANMELDUNG

(11) **EP 0 870 481 A1**
(43) Veröffentlichungstag der Anmeldung: **14.10.1998**
(21) Anmeldenummer: 98106336.5
(22) Anmeldetag: 07.04.1998
(51) Int. Cl.: A61C 19/00, B01D 46/24

(54) **Absaugvorrichtung, insbesondere für Zahntechniker-Arbeitsplätze**

(30) Priorität: 07.04.1997 DE 19714274
(71) Anmelder: Zubler Gerätebau GmbH, 89081 Ulm-Jungingen (DE)
(72) Erfinder: Zubler, Kurt, 89233 Neu-Ulm (DE)
(74) Vertreter: Fiener, Josef

(57) **Zusammenfassung**

Zur Erzielung einer staubfreien Entnahme eines Staubbehälters (5) und/oder Filterwechsels bei einer Absaugvorrichtung, insbesondere für Zahntechniker-Arbeitsplätze, zum Anschluß an staubbelastete Arbeitsplätze, umfassend wenigstens einen Absaugventilator (3), in dessen Luftweg mindestens eine Staubfiltereinheit (9) zwischengeschaltet ist, die in einer von einem Gehäuse (15) umschlossenen Filterkammer (8) an einer Halterung (17) auswechselbar befestigt ist, wird vorgeschlagen, daß beim Wechselvorgang der Staubfiltereinheit (9) und/oder eines Staubbehälters (5) die Absaugvorrichtung (1) mit reduzierter Absaugleistung betreibbar ist.

## Beschreibung

Die Erfindung betrifft eine Absaugvorrichtung, insbesondere für Zahntechniker-Arbeitsplätze, zum Anschluß an staubbelastete Arbeitsplätze, umfassend wenigstens einen Absaugventilator, in dessen Luftweg mindestens eine Staubfiltereinheit zwischengeschaltet ist, die in einer von einem Gehäuse umschlossenen Filterkammer an einer Halterung auswechselbar befestigt ist.

Derartige Absaugvorrichtungen dienen insbesondere in Dentallabors zum Absaugen von gesundheitsgefährdenden Stäuben, die bei der mechanischen Bearbeitung von Zahnersatz oder Gipsmodellen entstehen. Hierbei treten verschiedenartige Stäube, insbesondere Gipsstäube, Kunststoffstäube, Metallstäube und dergleichen auf, wobei insbesondere beim Beschleifen von in der Modellgußtechnik verwendeten Einbettmassen aufgrund des hohen Quarzgehaltes mineralische Stäube auftreten, die unter anderem Silikose verursachen können. Daher müssen an den Zahntechniker-Arbeitsplätzen die Staubkonzentrationen unter sehr geringen, von den Berufsgenossenschaften vorgeschriebenen Grenzwerten bleiben.

Zum Absaugen der gesundheitsgefährdenden Stäube werden häufig noch Einzelplatzabsauganlagen verwendet, wobei diese jedoch die gereinigte Luft in den Arbeitsraum zurückführen. Daher werden diese Einzelplatzabsauganlagen zunehmend durch Zentralabsaugvorrichtungen ersetzt, die in separaten Räumen, z. B. Kellerräumen, installiert sind und die gereinigte Luft nicht mehr in den Arbeitsraum zurückführen. Zur Filterung der von den Arbeitsplätzen angesaugten Luft werden im allgemeinen Staubfiltereinheiten verwendet, die eine große Filterfläche aufweisen, insbesondere sterngefaltete Filterpatronen, da diese zur Standzeiterhöhung der Filterpatronen eine zentrale Abreinigungsvorrichtung aufweisen. Eine derartige Abreinigungsvorrichtung besteht im allgemeinen aus einer rotierenden Luftdüse, die die Filterpatrone von innen nach außen ganzflächig ausbläst, beispielsweise alle 30 Minuten, so daß der Durchlaßgrad im wesentlichen konstant bleibt und eine hohe Filterlebensdauer erreicht wird. Ebenso kann eine Filterabklopfvorrichtung verwendet werden.

Bei einer derartigen Absaugvorrichtung ist unterhalb der Filterpatronen im allgemeinen eine Staubsammelwanne und ein Staubbehälter vorgesehen, die zum Filterwechsel entnommen werden. Bei der Entnahme des Staubbehälters und/oder der Staubfiltereinheit aus der Absaugvorrichtung kann es jedoch durch Abfallen von Staub von der Filterpatrone z. B. durch leichte Erschütterungen oder Berührungen zu erheblichen Staubverwirbelungen und damit zu einer ernsthaften Gesundheitsbelastung kommen.

Demzufolge liegt der Erfindung die Aufgabe zugrunde, eine Absaugvorrichtung zu schaffen, wobei die Entnahme des Staubbehälters und/oder der Filterwechsel möglichst staubfrei durchzuführen ist.

Diese Aufgabe wird gelöst durch eine Absaugvorrichtung gemäß den Merkmalen des Anspruches 1.

Durch die Aufrechterhaltung der Absaugung bei Wartungs- oder Austauschvorgängen an der Absaugvorrichtung, insbesondere der Entnahme des Staubbehälters und/oder beim Filterwechsel wird der Aufnahmeraum des Staubbehälters und die Filterkammer mit Unterdruck beaufschlagt, so daß gegebenenfalls von der Staubfiltereinheit abfallender Staub nicht in den Bereich der Bedienperson gelangt. Somit wird eine Reststaubbeseitigung durchgeführt, was eine staubfreie Entnahme des Staubbehälters und/oder auch einen staubfreien Filterwechsel ermöglicht. Für diesen Wechselvorgang wird hierbei die Absaugvorrichtung mit stark reduzierter Absaugleistung betrieben, die jedoch ausreicht, gegebenenfalls vorhandenen Reststaub an die Filteroberfläche anzusaugen, so daß der Staub von der Filterpatrone nicht abfallen kann. Dieser "Minimalbetrieb" der Absaugvorrichtung wird dabei bevorzugt beim Öffnen der Entnahmetür bzw. -klappe aktiviert. Es können auch im Bereich der Entnahmeklappe bzw. Entnahmetür Absaugöffnungen vorgesehen sein, so daß sichergestellt wird, daß aus der Absaugvorrichtung kein Staub nach außen aufgewirbelt wird.

Weitere vorteilhafte Ausgestaltungen der Erfindung sind Gegenstand der abhängigen Ansprüche.

Nachfolgend wird ein Ausführungsbeispiel der Absaugvorrichtung anhand der Zeichnungen näher beschrieben und erläutert. Hierbei zeigen:
- Fig. 1: eine Vorderansicht einer bevorzugten Ausführungsform der Absaugvorrichtung;
- Fig. 2: eine Seitenansicht der Absaugvorrichtung gemäß Fig. 1;
- Fig. 3: eine Perspektivdarstellung der Absaugvorrichtung gemäß Fig. 1 und Fig. 2 in Betriebsstellung; und
- Fig. 4: eine Perspektivdarstellung gemäß Fig. 3 in Filterwechselstellung.

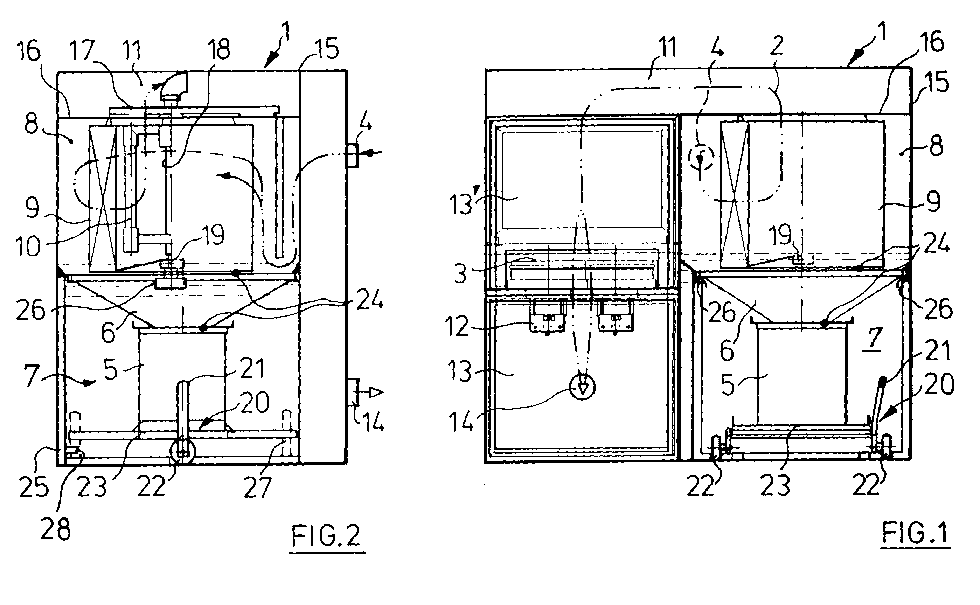

In Fig. 1 und 2 ist eine Absaugvorrichtung 1 dargestellt, deren grundsätzlicher Aufbau nachfolgend kurz beschrieben wird. Wenigstens ein Absaugventilator 3 saugt die abzufilternden Stäube von einem nicht näher dargestellten Arbeitsplatz über einen doppelt strichpunktiert dargestellten Luftweg 2 an. Die zu reinigende, angesaugte Luft tritt an einem oder mehreren Ansaugstutzen 4 in das Gehäuse 15 der Absaugvorrichtung 1 ein, wobei die abgeschiedenen Stäube in einem Staubbehälter 5 gesammelt werden, in den diese über eine trichterförmige Staubsammelwanne 6 gelangen. Bevorzugt ist hierbei eine Vorabscheidewand vorgesehen, um eine Umlenkung und Verteilung des Luftstroms, sowie das direkte Abscheiden von schwereren Stäuben zu ermöglichen. Über dem in einer Aufnahmekammer 7 angeordneten Staubbehälter 5 ist eine geschlossene Filterkammer 8 vorgesehen, in der eine oder auch mehrere Staubfiltereinheiten 9 angeordnet sind.

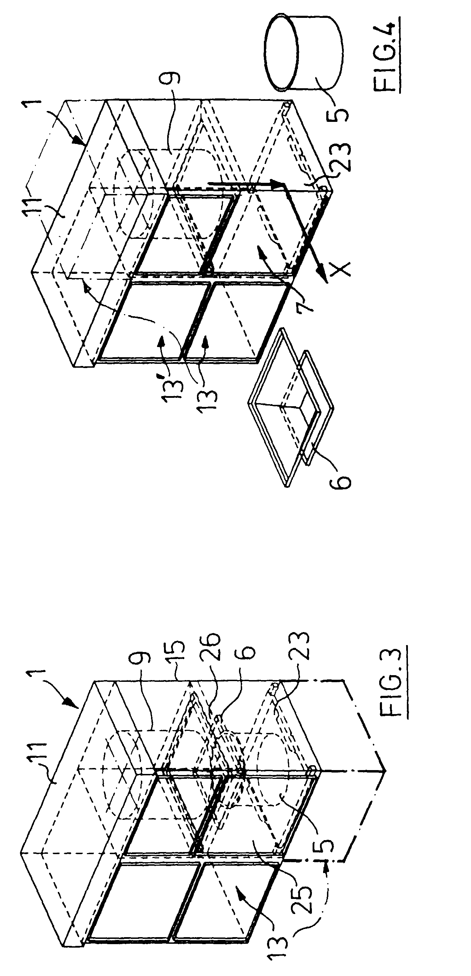

Im Inneren der Staubfiltereinheit 9 ist, wie im Halbschnitt in Fig. 2 ersichtlich, eine Abreinigungsvorrichtung 10 in Form einer an sich bekannten rotierenden Luftdüse vorgesehen, die zeitweise von einem nicht näher dargestellten Druckbehälter mit einem Druckluftstrom beaufschlagt und aktiviert wird, um die Staubfiltereinheit 9 von innen nach außen abzublasen, und damit eine höhere Filterstandzeit zu ermöglichen. Aus dem Inneren der Staubfiltereinheit 9 führt ein im oberen Bereich verlaufender Luftkanal 11 zu dem oder den Absaugventilatoren 3, deren Turbinen bevorzugt von jeweils einem drehzahlveränderbaren Motor 12, beispielsweise einem umrichtergesteuerten Hochfrequenzmotor, angetrieben werden. Vor und nach den Turbinen der Absaugventilatoren 3 ist jeweils innerhalb des Gehäuses 15 der Absaugvorrichtung 1 ein Freiraum vorgesehen, wobei derjenige nach den Absaugventilatoren 3 als Luftberuhigungszone 13 dient und in einen Stutzen 14 für den Reinluftaustritt mündet. Der Bereich 13' dient zum Einsetzen von Feinfiltern oder Aktivkohlefiltern. Die Kammern 13, 13' zur Aufnahme des Motors 12 können dabei auch oberhalb oder unterhalb der Filterkammer 8 angeordnet sein, wie dies in Fig. 3 und Fig. 4 in Strichpunktlinien angedeutet ist, so daß sich eine säulenförmige Gestaltung ergibt. Hierbei wurde der Luftkanal 11 seitlich oder an der Rückseite verlaufen.

Im Gehäuse 15 der Absaugvorrichtung 1 ist über der Filterkammer 8 an einer oberen Abdeckwand 16 eine zur Bildung von Luftdurchlässen sternförmige Halterung 17 vorgesehen. Die Staubfiltereinheit 9 ist in aufrechter Stellung an dieser Halterung 17 auswechselbar befestigt, die ein Zentralrohr 18 umfaßt, an der auch die Lüfterdüsen des Abreinigungssystemes 10 gelagert sind. Die Filterpatrone 9 kann jedoch auch liegend angeordnet sein. An der Unterseite der Staubfiltereinheit 9 ist zudem eine Halterungsschraube 19 oder eine gleichwirkende Schnellverschlußeinrichtung vorgesehen, so daß nach deren Lösen die Staubfiltereinheit 9 nach unten bzw. bei liegender Anordnung seitlich abgezogen werden kann.

Dabei ist vorgesehen, daß die Staubsammelwanne 6 und der Staubbehälter 5 aus der Aufnahmekammer 7 bzw. dem Gehäuse 15 der Absaugvorrichtung 1 herausnehmbar angeordnet sind, wie dies im Vergleich zwischen den Perspektivdarstellungen in Fig. 3 (Betriebsstellung) und Fig. 4 (Filterwechselstellung) dargestellt ist. Nach Herausnehmen der trichterförmigen Staubsammelwanne 6 und des Staubbehälters 5 kann die Staubfiltereinheit 9 nach Lösen der Halterungsschraube 19 (vgl. Fig. 2) nach unten und nach vorne entsprechend dem Pfeil X in Fig. 4 herausgenommen werden. Hierbei ist die trichterförmige Staubsammelwanne 6 bevorzugt an zwei seitlichen Führungen 26 geführt, so daß die Staubsammelwanne 6 in Art einer Schublade nach vorne herausgezogen werden kann. Hierbei wird selbstverständlich vorher eine seitliche oder hier vordere Abschlußtür 25 (vgl. Fig. 2 und 3) geöffnet, um den Staubbehälter 5, der auf einer Grundplatte 23 mit Federbolzen 27 abgestützt ist, zu entnehmen.

Bevorzugt wird hierbei zugleich mit dem Öffnen der Abschlußtür 25 ein Schalter 28 (vgl. Fig. 2) betätigt, der dann über ein nicht näher dargestelltes elektronisches Steuerteil den Motor 12 aktiviert. Die Drehzahl des Motors 12 ist dabei so ausgelegt, daß die Absaugleistung erheblich reduziert ist, beispielsweise nur 5% der maximalen Absaugleistung. Dieser Unterdruck bzw. Absaugleistung reicht jedoch aus, um in der Filterkammer 8 schwebende Stäube an die Filteroberfläche anzusaugen, so daß während der Entnahme des Staubbehälters 5 kein Staub von der Staubfiltereinheit 9 herabfallen kann. Der Schalter 28 zur Aktivierung dieses "Minimalbetriebes" kann dabei auch durch einen Näherungsschalter, der das Öffnen der vorderen Abschlußtür 25 signalisiert, gebildet sein. Es kann jedoch auch ein separater Schalter an der Steuertafel der Absaugeinrichtung 1 hierzu vorgesehen sein. Ebenso kann der Schalter 28 mit einem Füllstandssensor gekoppelt sein, der bei vollständiger Befüllung des Staubbehälters 5 meist ohnehin den Betrieb der Absaugvorrichtung 1 unterbricht und zum Wechsel des Staubbehälters 5 auffordert.

Weiterhin ist hierbei eine Hebevorrichtung 20 vorgesehen, die auf die Grundplatte 23 wirkt, wobei ein Hebel 21 seitlich an der Grundplatte 23 gelagert ist. Am unteren Ende des Hebels 21 ist eine Rolle 22 vorgesehen, wobei der Hebel 21 durch eine durchgehende Achse innerhalb der Grundplatte 23 auch auf eine oder mehrere Rollen 22 an der anderen Seite der Grundplatte 23 wirkt. Nach Umlegen des Hebels 21, der ebenfalls mit dem vorstehend beschriebenen Schalter 28 gekoppelt sein kann, wird somit die Grundplatte 23 geringfügig abgesenkt, so daß der Staubbehälter 5 ebenfalls gemäß dem Pfeil X in Fig. 4 nach vorne herausgenommen werden kann. Die Hebevorrichtung 20 gewährleistet insbesondere eine sichere Abdichtung an Dichtflächen 24, einerseits zwischen dem Staubbehälter 5 und der Staubsammelwanne 6 und andererseits zwischen der Staubsammelwanne 6 und der Filterkammer 8. Nach Absenken der Hebevorrichtung 20 mit Aktivierung des Minimal-Absaugbetriebes durch Umlegen des Hebels 21 werden somit die beiden Dichtflächen 24 geringfügig voneinander entfernt, so daß der Staubbehälter 5 und die Staubsammelwanne 6 auf einfache Weise durch die vordere Tür 25 herausgezogen werden können. Hierdurch wird somit der für den Filterwechsel benötigte Freiraum für die Staubfiltereinheit 9 geschaffen, so daß diese senkrecht nach unten von dem Abreinigungssystem 10 gezogen werden kann, wobei der Absaugbetrieb mit reduzierter Leistung aufrechterhalten bleiben kann, um Reststäube zu beseitigen. Hierbei kann der Schalter 28 auch mit der Halterungsschraube 19 gekoppelt sein. Hierdurch wird erreicht, daß die Absauganlage 1 nur im abgedichteten Zustand mit hoher Leistung betrieben werden kann, wahrend beim Wechselvorgang eine geringfügige Absaugleistung zur Beseitigung von Reststaub ausreicht.

Durch die vorgeschlagenen Maßnahmen ergibt sich somit eine Absaugvorrichtung 1 mit einer sehr großen Arbeitssicherheit und Staubfreiheit beim Herausnehmen der Filterpatrone 9, der Staubsammelwanne 6 und insbesondere des Staubbehälters 5. Insbesondere ergibt sich beim Filterwechseln eine erhebliche Reduzierung der Staubbelastung, ebenso bei Wartungsarbeiten an der Absaugvorrichtung 1, so daß diese auch in Arbeitsräumen als Untertischgerät oder als Einbaugerät in Schränken installiert werden kann. Der Grad der Staubfreiheit läßt sich hierbei noch steigern, wenn vor dem Wechselvorgang ein Abreinigungsprogramm in der Filterkammer 8, z. B. durch Abblasen der Staubfiltereinheit 9 mittels einer Ringdüse und sich daran unmittelbar anschließenden Absaugen der Schwebstoffe, erfolgt. Hierdurch wird sichergestellt, daß Ablagerungen in der Filterkammer 8 oder der Staubsammelwanne 6 in den bevorzugt durchmessergrößeren Staubbehälter 5 gefördert werden. Dieses Abreinigungsprogramm kann mehrfach wiederholt werden, wobei die Zugangstür 25 in diesem Falle automatisch gesperrt bleibt und erst nach Abschluß des Reinigungsprogrammes mit Übergang in die reduzierte "Minimal"-Absaugung freigegeben wird.

## Patentansprüche

1. Absaugvorrichtung, insbesondere für Zahntechniker-Arbeitsplätze, zum Anschluß an staubbelastete Arbeitsplätze, umfassend wenigstens einen Absaugventilator (3), in dessen Luftweg mindestens eine Staubfiltereinheit (9) zwischengeschaltet ist, die in einer von einem Gehäuse (15) umschlossenen Filterkammer (8) an einer Halterung (17) auswechselbar befestigt ist,
dadurch gekennzeichnet, daß
beim Wechselvorgang der Staubfiltereinheit (9) und/oder eines Staubbehälters (5) die Absaugvorrichtung (1) mit reduzierter Absaugleistung betreibbar ist.

2. Absaugvorrichtung nach Anspruch 1,
dadurch gekennzeichnet, daß
die Absaugleistung beim Wechselvorgang etwa 5% der Maximal-Absaugleistung beträgt.

3. Absaugvorrichtung nach Anspruch 1 oder 2,
dadurch gekennzeichnet, daß
die reduzierte Absaugleistung beim Wechselvorgang des Staubbehälters (5) und/oder der Staubfiltereinheit (9) von einem Schalter (28) aktiviert ist.

4. Absaugvorrichtung nach Anspruch 3,
dadurch gekennzeichnet, daß
der Schalter (28) von einer Hebevorrichtung (20) des Staubbehälters (5) betätigbar ist.

5. Absaugvorrichtung nach Anspruch 3 oder 4,
dadurch gekennzeichnet, daß
der Schalter (28) von einer Zugangstür (25) des Staubbehälters (5) betätigbar ist.

6. Absaugvorrichtung nach Anspruch 4,
dadurch gekennzeichnet, daß
die Hebevorrichtung (20) einen umlegbaren Hebel (21) aufweist, der mit dem Schalter (28) gekoppelt ist.

7. Absaugvorrichtung nach Anspruch 3,
dadurch gekennzeichnet, daß
der Schalter (28) von der Halterungsvorrichtung (19) der Staubfiltereinheit (9) betätigbar ist.

8. Absaugvorrichtung nach einem der Ansprüche 1 bis 7,
dadurch gekennzeichnet, daß
im Bereich des Staubbehälters (5), einer Staubsammelwanne (6) und/oder Staubfiltereinheit (9) zusätzliche Absaugöffnungen vorgesehen sind.

9. Absaugvorrichtung nach einem der Ansprüche 1 bis 8,
dadurch gekennzeichnet, daß
vor dem Wechselvorgang in der Filterkammer (8) wenigstens eine Abreinigung der Staubfiltereinheit (9) erfolgt.
